# EUROPEAN PATENT SPECIFICATION

(11) **EP 0 922 371 B1**
(45) Date of publication and mention of the grant of the patent: **07.04.2010**
(21) Application number: 97929389.1
(22) Date of filing: 26.06.1997
(51) Int. Cl.: H04W 36/30

(54) **METHOD AND APPARATUS FOR MONITORING CHANNELS TO ENABLE HANDOFF IN MOBILE COMMUNICATION SYSTEMS**
VERFAHREN UND VORRICHTUNG ZUR ÜBERWACHUNG DER KANALGÜTE FÜR DIE ZELLENUMSCHALTUNG IN MOBILFUNKSYSTEMEN
PROCEDE ET DISPOSITIF SERVANT A CONTROLER DES CANAUX DE COMMUNICATION POUR PERMETTRE UN TRANSFERT DANS DES SYSTEMES DE COMMUNICATION MOBILES

(30) Priority: 28.06.1996 GB 9613666
(43) Date of publication of application: 16.06.1999
(73) Proprietor: Motorola Limited, Basingstoke, Hampshire RG22 4PD (GB)
(72) Inventor: WHINNETT, Nicholas, William, F-75004 Paris (FR); ROBINSON, William, Neil, F-78860 Saint Nom la Breteche (FR)
(74) Representative: Jepsen, René Pihl
(86) International application number: PCT/GB1997/001753
(87) International publication number: WO 1998/000999

(56) References cited:
- EP-A- 0 318 033
- EP-A- 0 330 222
- EP-A- 0 530 165
- EP-A- 0 566 551
- EP-A- 0 727 915
- US-A- 4 829 519
- US-A- 5 175 867
- US-A- 5 267 261
- US-A- 5 383 221
- US-A- 5 479 410
- US-A- 5 612 992

## Description

### Field of the Invention

The present invention is generally related to a communication device, and more particularly, to a method and apparatus for monitoring channels to enable handoff in a communication system.

### Background of the Invention

Wireless communication systems which continuously transmit data, such as CDMA systems as set forth in IS-95, provide insufficient means for inter-frequency handoff and inter-system handoff. Such continuous transmission systems do not enable a mobile terminal to scan other frequencies of its serving system or other systems, while active in a call, unless multiple receivers are provided which adversely impart cost, size and weight of a mobile terminal. An inter-system hand off is typically performed when a mobile terminal moves from one system into a neighbouring system. With CDMA soft hand off, the mobile station communicates simultaneously with multiple base stations which are said to be in the mobile station's "active set". Although IS-95 does not currently support hand off when members of the active set are in two different systems, there have been proposals to enable such a hand off.

An example of a handoff method for a cellular digital mobile communication system and mobile station is described in European Patent Application EP-A-0318 033.

To enable mobile assisted handoff to a new system on a different frequency, in one proposed system pilots would be operated by the new system on the same frequency as the mobile is using. The terminal would search for pilots from the new systems while operating its designated frequency. If the level of the pilot exceeds a threshold, the mobile terminal autonomously sends the report containing both the pilot's pseudo number (PN) base and the pilot strength to the base station. Based upon these reports, the base stations which are to be on the new active set are determined. However, such an arrangement not only requires additional equipment at the base sites, but also introduces interference between the systems which, although tolerable, is generally undesirable. Alternatively, the mobile terminal could negotiate with the base site to enter into a time discontinuous mode to enable the terminal to monitor other frequencies. However, this solution would require a costly system design to change existing systems.

Accordingly, there is also a need for a method and apparatus for handing off in a communication system adopted to continuously transmit data.

### Brief Description of the Drawings

FIG. 1 is a block diagram of a communication system according to the present invention;
FIG. 2 is a block diagram of a mobile terminal according to the present invention;
FIG. 3 is a frame diagram showing frames of data transmitted according to the present invention;
FIG. 4 is a flow chart showing the preferred method of handoff according to the present invention;
FIG. 5 is a chart showing bit error rate performance according to the present invention; and
FIG. 6 is a chart showing bit error rate performance according to an alternate embodiment of the present invention.

### Detailed Description of the Invention

The present invention is generally related to a method and apparatus for monitoring channels. Preferably, a terminal of a wireless communication device receives and monitors the quality of a dominant signal for a portion of a frame in a communication system. The terminal then compares the quality of the signal to one or more thresholds. Depending upon the result of the comparison, the terminal decides whether to scan the current channel or to scan another channel during the remainder of the frame. If the terminal scans another channel, the terminal uses an error correction technique to cover the data lost during the scanning. The present invention finds particular application in continuous transmission communication systems such as CDMA systems. Also, the present invention can be used beneficially to enable handoff within a serving system or to another system

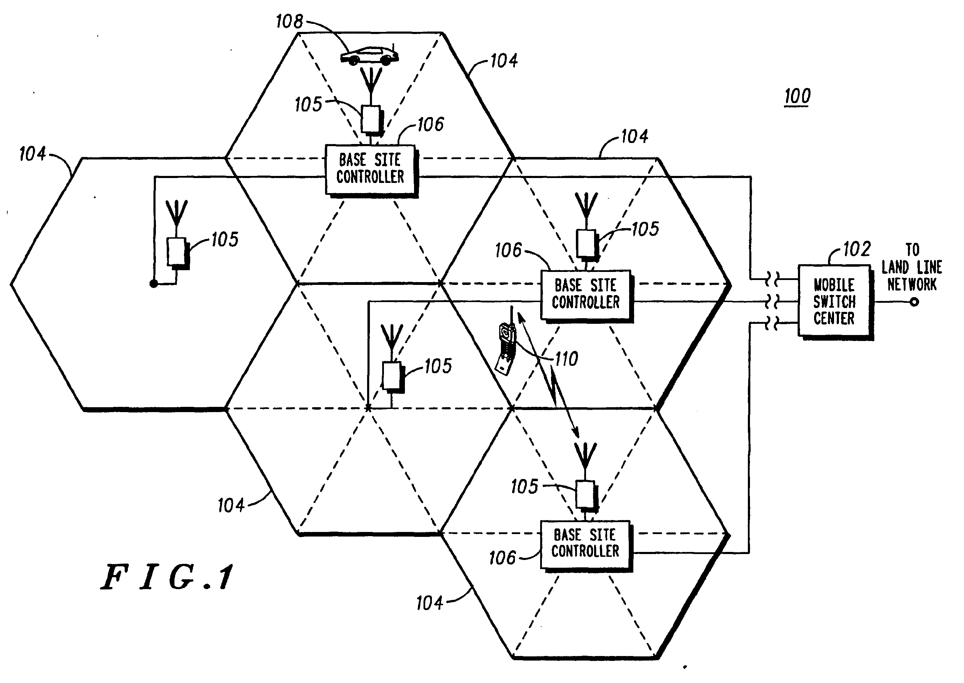

Turning now to FIG. 1, a wireless communication network 100 is shown. Wireless communication network 100 preferably includes a mobile switching centre 102, a plurality of cell sites 104 each having a base station 105 coupled to a base site controller 106. Finally, mobile communication devices 108 or portable communications devices 110 (collectively "mobile terminals") are adapted to communicate with base stations associated with base site controllers 106 to maintain communications with another mobile unit or a wireless unit associated with a landline network.

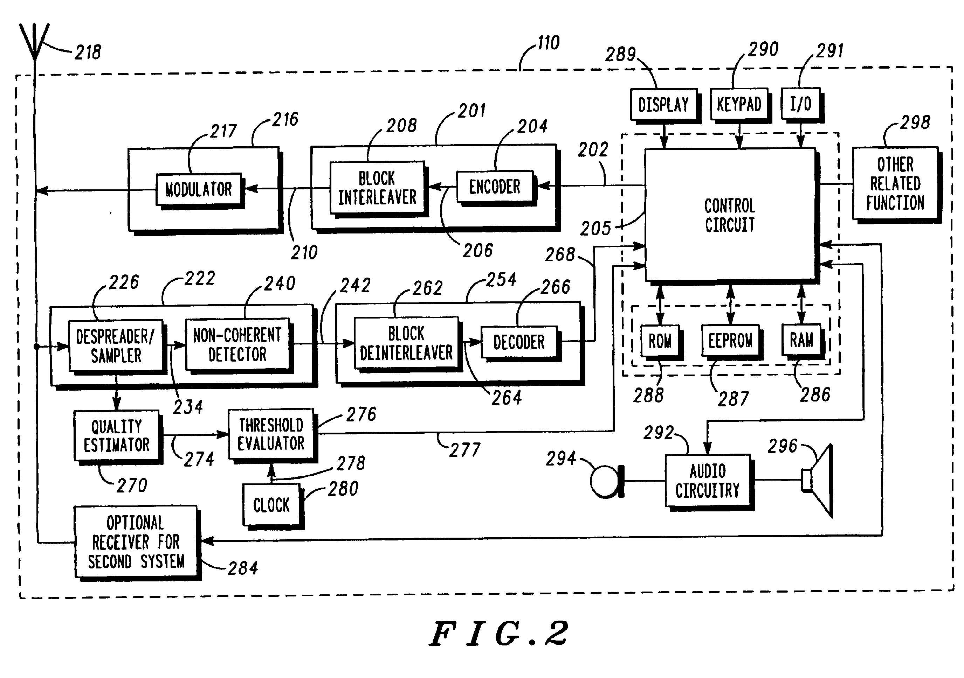

Turning now to FIG. 2, a mobile terminal for the wireless communication system is shown. FIG. 2 generally depicts a mobile terminal 110 in CDMA communication. While the present invention finds particular application in a continuous transmission system such as code division multiple access (CDMA) system as described in IS-95 published by the EIA-TIA, the present invention could be employed in other communication systems. In the encoding portion 201 of the communication system, traffic channel data bits 202 originate from a control circuit 205 such as a microprocessor, and are input to an encoder 204 at a particular bit rate (e.g., 9.6 kilobit/second).

The traffic channel data bits 202 can include either voice converted to data by a vocoder, pure data, or a combination of the two types of data. Encoder 204 encodes the traffic channel data bits 202 into data symbols 206 at a fixed encoding rate (1/r) with an encoding algorithm which facilitates subsequent maximum likelihood decoding of the data symbols into data bits (e.g., convolutional or block coding algorithms). For example, encoder 204 encodes traffic channel data bits 202 (e.g., 192 input data bits that were received at a rate of 9.6 kilobits/second) at a fixed encoding rate of one data bit to three data symbols (i.e., 1/3) such that the encoder 204 outputs data symbols 206 (e.g., 576 data symbols output at a 28.8 kilo symbols/second rate).

The data symbols 206 are then input into an interleaver 208. Interleaver 208 organises the data symbols 206 into blocks (i.e., frames) and block interleaves the input data symbols 206 at the symbol level. In the interleaver 208, the data symbols are individually input into a matrix which defines a predetermined size block of data symbols. The data symbols are input into locations within the matrix so that the matrix is filled in a column by column manner. The data symbols are individually output from locations within the matrix so that the matrix is emptied in a row by row manner. Typically, the matrix is a square matrix having a number of rows equal to the number of columns; however, other matrix forms can be chosen to increase the output interleaving distance between the consecutively input non-interleaved data symbols. The interleaved data symbols 210 are output by the interleaver 208 at the same data symbol rate that they were input (e.g., 28.8 kilo symbols/second). The predetermined size of the block of data symbols defined by the matrix is derived from the maximum number of data symbols which can be transmitted at a coded bit rate within a predetermined length transmission block. For example, if data symbols 206 are output from the encoder 204 at a 28.8 kilo symbols/second rate, and if the predetermined length of the transmission block is 20 milliseconds, then the predetermined size of the block of data symbols is 28.8 kilo symbols/second times 20 milliseconds (ms) which equals 576 data symbols which defines a 18 by 32 matrix.

The encoded, interleaved data symbols 210 is output from encoding portion 201 of the communication system and input to a transmitting portion 216 of the communication system. The data symbols 210 are prepared for transmission over a communication channel by a modulator 217. Subsequently, the modulated signal is provided to an antenna 218 for transmission over the digital radio channel to base station 105 of the communication system.

The modulator 217 prepares the data symbols 210 for direct sequence code divided spread-spectrum transmission by deriving a sequence of fixed length codes from the encoded, interleaved data symbols 210 in a spreading process. For example, the data symbols within the stream of reference-coded data symbols may be spread to a unique fixed length code such that a group of six data symbols is represented by a single 64 bit length code. The codes representing the group of six data symbols preferably are combined to form a single 64 bit length code. As a result of this spreading process, the modulator 217 which received the encoded, interleaved data symbols 210 at a fixed rate (e.g., 28.8 kilo symbols/second) now has a spread sequence of 64 bit length codes having a higher fixed symbol rate (e.g., 307.2 kilo symbols/second). It will be appreciated by those skilled in the art that the data symbols within the stream of encoded, interleaved data bits may be spread according to numerous other algorithms into a sequence of larger length codes without departing from the scope and spirit of the present invention.

The spread sequence is further prepared for direct sequence code divided spread-spectrum transmission by further spreading the spread sequence with a long spreading code (e.g., PN code). The spreading code is a user specific sequence of symbols or unique user code which is output at a fixed chip rate (e.g., 1.228 Megachips/second). In addition to providing an identification as to which user sent the encoded traffic channel data bits 202 over the digital radio channel, the unique user code enhances the security of the communication in the communication channel by scrambling the encoded traffic channel data bits 202. In addition, the user code spread encoded data bits (i.e., data symbols) are used to bi-phase modulate a sinusoid by driving the phase controls of the sinusoid. The sinusoid output signal is bandpass filtered, translated to an RF frequency, amplified, filtered and radiated by an antenna 218 to complete transmission of the traffic channel data bits 202 in a digital radio channel with Binary Phase Shift Keyed (BPSK) modulation. Alternatively, two long spreading codes can be used for spreading to produce quadrature modulation.

A receiving portion 222 of the mobile terminal receives the transmitted spread-spectrum signal from over the digital radio channel through antenna 218. The received signal is sampled into data samples by despreader and sampler 226. Subsequently, the data samples 242 are output to the decoding portion 254 of the communication system.

The despreader and sampler 226 preferably BPSK samples the received spread-spectrum signal by filtering, demodulating, translating from the RF frequencies, and sampling at a predetermined rate (e.g., 1.2288 Megasamples/second). Subsequently, the BPSK sampled signal is despread by correlating the received sampled signals with the long spreading code. A rake receiver, well known to those skilled in the art, can be used when there is significant propagation delay between multipath signals. The resulting despread sampled signal 234 is sampled at a predetermined rate and output to a non-coherent detector 240 (e.g., 19.2 kilo samples/second so that a sequence of 64 samples of the received spread-spectrum signal is despread and/or represented by a single data sample) for non-coherent detection of data samples 242.

As will be appreciated by those skilled in the art, multiple receiving portions and antennae can be used to achieve space diversity. A receiver portion would operate in substantially the same manner to retrieve data samples from the received spread-spectrum signal in digital radio channel 220 as the above described receiving portion 222. The outputs of the receiving portions preferably are input to a summer which diversity combines the input data samples into a composite stream of coherently detected data samples.

The data samples 242 which form soft decision data are then input into a decoding portion 254 including a deinterleaver 262 which deinterleaves the input soft decision data 260. In the deinterleaver 262, the data samples 242 are input into a matrix which defines a predetermined size block of soft decision data. The soft decision data are input into locations within the matrix so that the matrix is filled in a row by row manner. The deinterleaved soft decision data 264 are individually output from locations within the matrix so that the matrix is emptied in a column by column manner. The deinterleaved soft decision data 264 are output by the deinterleaver 262 at the same rate that they were input (e.g., 19.2 kilometrics/second).

The predetermined size of the block of soft decision data defined by the matrix is derived from the maximum rate of sampling data samples from the spread-spectrum signal received within the predetermined length transmission block.

The deinterleaved soft decision data 264, are input to a decoder 266 which uses maximum likelihood decoding techniques to generate estimated traffic channel data bits 268. The maximum likelihood decoding techniques may be augmented by using an algorithm which is substantially similar to a Viterbi decoding algorithm. The decoder 266 uses a group of the individual soft decision data 364 to form a set of soft decision transition metrics for use at each particular time state of the maximum likelihood sequence estimation decoder 266. The number of soft decision data 264 in the group used to form each set of soft decision transition metrics corresponds to the number of data symbols 206 at the output of the convolutional encoder 204 generated from each input data bit 202. The number of soft decision transition metrics in each set is equal to two raised to the power of the number of soft decision data 264 in each group. For example, when a 1/2 convolutional encoder is used in the transmitter, two data symbols 206 are generated from each input data bit 202. Thus, decoder 266 uses groups of two individual soft decision data 264 to form four soft decision transition metrics for use at each time state in the maximum likelihood sequence estimation decoder 266. The estimated traffic channel data bits 268 are generated at a rate related to the rate that the soft decision data 264 are input to the decoder 266 and the fixed rate used to originally encode the traffic channel data bits 202 (e.g., if the soft decision data are input at 19.2 kilometrics/second and the original encoding rate was 1/2 then estimated traffic channel data bits 268 are output at a rate of 9600 bits/second). The estimated traffic channel data bits 268 are input into a microprocessor 205 which interprets the estimated traffic channel data bits 268 and other fields.

The mobile terminal further includes channel quality estimator 228 which receives and monitors the quality of the despread sample signal, and generates a quality signal 274. A threshold evaluator 176 receives the quality signal and generates a signal 277 which is based upon the outcome of a comparison of the quality signal to threshold values T1 and T2, which will be described in more detail in reference to the remaining FIGs. The threshold evaluation receives a clock signal 278 from a clock 280 to enable the determination of periods t₁ and t₂ described below. Control circuit 203, such as a 68HC11 microprocessor available from Motorola, Inc., accesses other related circuitry 298 to generate the necessary communication protocol for operating in a communication system. Control circuit 205 is also coupled to RAM 286, EEPROM 287 and ROM 288 to perform other functions for the communication unit, such as writing to a display 288 and accepting information from a keypad 290. Finally, control circuit 205 also processes audio transformed by the audio circuitry 292 from a microphone 294 and to a speaker 296. Alternatively, the receiving portion 222 can simultaneously despread a CDMA pilot allowing coherent detection to take place. The quality estimator 270 can use the pilot to estimate the quality of the received signal.

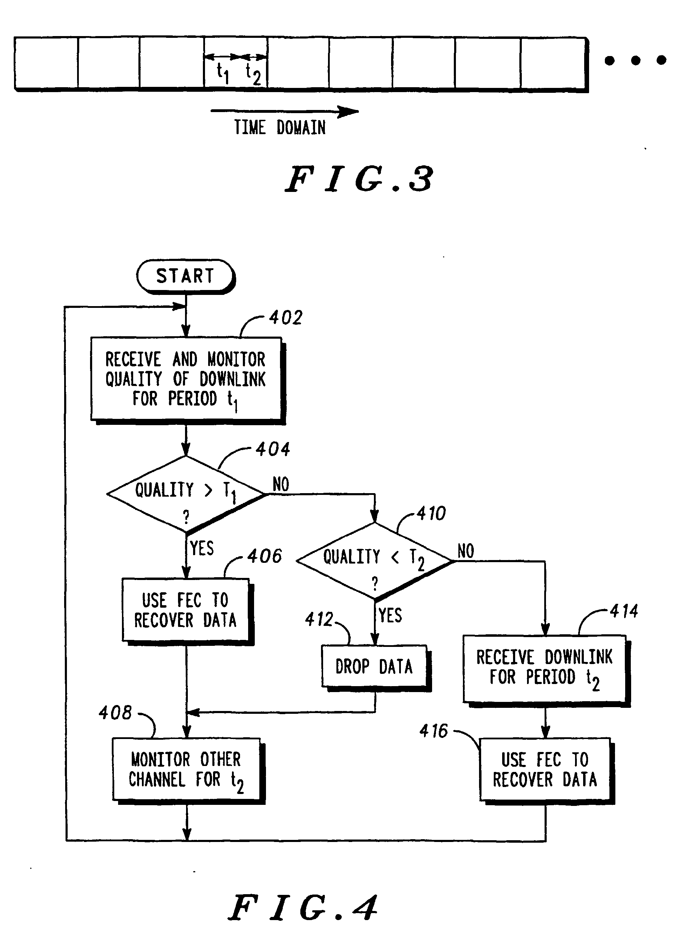

Turning now to FIGs. 3 and 4, the preferred steps for monitoring a channel according to the present invention are shown. At a step 402, the terminal receives and monitors the quality of a dominant signal for a period t₁. The terminal then determines whether the quality is greater than a first threshold T1 at a step 404. If the channel quality is greater than a threshold T1, the terminal uses an error correction technique to cover the data at a step 406. For example, the terminal could use forward error correction, which is well known in the art. The terminal then monitors another channel for a period t₂ at a step 408. Threshold T1 is generally an upper threshold. Therefore, if the signal quality is greater than a certain upper threshold, the forward error correction will provide the necessary data which will be lost whilst monitoring another channel during t₂.

If the signal quality is not greater than the upper threshold T1, the terminal determines whether the signal quality is less than a second, lower threshold, T2 at a step 410. If the signal quality is less than the lower threshold T2, the terminal discards the data at a step 412 and monitors another channel for a period T2 at step 408. Because the signal quality is so low, it is unlikely that the data could be decoded. Therefore, it is beneficial for the terminal to monitor another channel at step 408. However, if the channel quality is greater than the lower threshold T2, but less than quantity threshold T1, the terminal receives the down link of the current channel at a step 414 for the remaining period t₂. The terminal then uses an error correction technique such as forward error correction to recover the data at a step 416.

The preferred time periods and threshold levels would depend upon the system. In an IS951 CDMA system having 20 msec frames, t₁ could be 18 msec while t₂ could be 2 msec. However, such time periods could vary depending upon a number of factors including the frame duration, the system, system loading, etc. Similarly, the thresholds T1 and T2 would vary depending upon the error correction scheme and other factors.

By way of example, a conventional CDMA down link using standard half rate coding and interleaving applied over each 20 msec traffic frame is described. A pilot signal is recovered and used for coherent reception in a rake receiver and for quality estimation. During the first 18 milliseconds of the frame, the quality of the signal is estimated from the CDMA pilot signal. The quality can be estimated by accumulating the squared error between the instantaneous channel estimate (available every 52 micro seconds or 64 chips) and the processed (for example smoothed) channel estimates. If the signal quality is greater than a threshold T1, or worse than a threshold T2, the handset performs inter-frequency monitoring for the remaining 2 milliseconds of the frame. Otherwise, the handset continues to receive the CDMA traffic channel. If inter-frequency monitoring occurs during the last two milliseconds, then the channel estimates and the CDMA pilot receiver are preferably held constant. Also, the traffic channel rake receiver is disabled and soft decision values of 0.0 are substituted for the rake receiver output.

On the downlink of a conventional CDMA system, tight power control is typically not employed. Therefore, signal quality varies due to fading. When the single conditions are sufficiently good, then the forward error correction (FEC) is able to accommodate a 10% loss in data due to monitoring, so that the information bits are recovered without error. When a signal is very bad, the FEC is unlikely to code the information bits correctly, so the handset would be best utilised in scanning other channels for the remainder of the frame. In practice, the signal is bad only rarely (a targeted decoded bit error rate may be 0.1%) so that the low quality condition only rarely occurs.

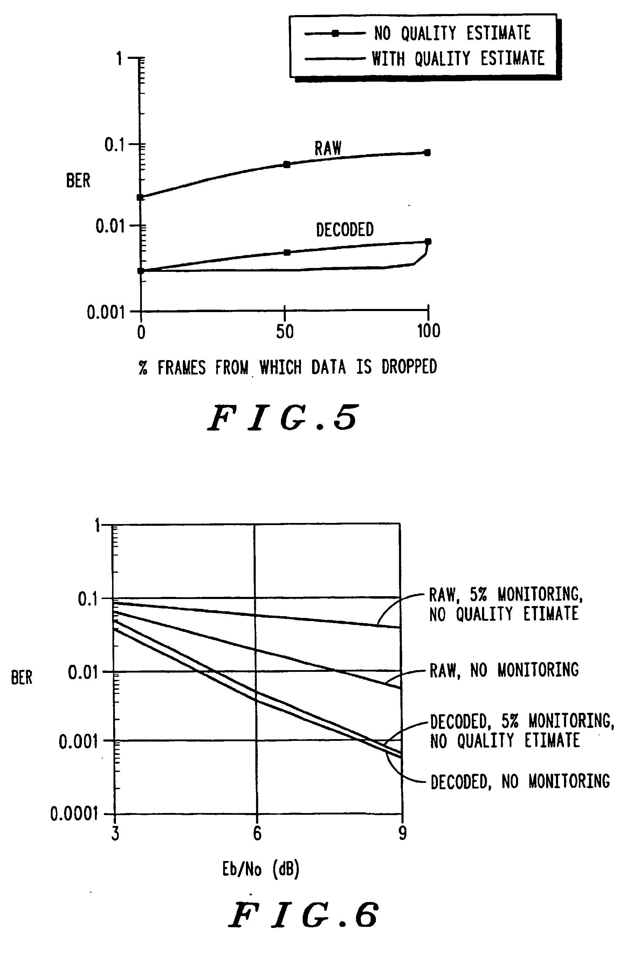

Dropping 2 milliseconds out of a 20 millisecond frame without taking quality into account results in the degradation of the decoded BER performance. This is illustrated in FIG. 5 where the decoded bit error rate increases in proportion to the number of frames from which data is dropped, if quality is not taken into account. With the quality measure, the thresholds T1 and T2 can be arranged such that data can be dropped from about 80% of the frames before a decoded performance significantly suffers.

Without taking quality into account, dropping data from only 50% of the frames (5% data loss in total) results in a 0.5 - 1.0 dB performance loss, as shown in FIG. 6. For CDMA systems, this relates to a loss in capacity of between 10 and 20%. This loss would be even greater if data were dropped from a higher proportion of frames. Making use of the quality estimate, data can be dropped from up to 80% of the frames without incurring any significant capacity loss (less than 1%).

In summary, the present invention is generally related to a method and apparatus for monitoring channels to enable handoff in a communication system. Preferably, a terminal of a wireless communication device receives and monitors the quality of a dominant signal for a portion of a frame in a communication system. The terminal then compares the quality of the signal to one or more thresholds. Depending upon the result of the comparison, the terminal decides whether to scan the current channel or to scan another channel to enable handoff during the remainder of the frame. If the terminal scans another channel, the terminal uses an error correction technique to cover the data lost during the scanning. The present invention finds particular application in continuous transmission communication systems such as CDMA systems. While the specific implementations of the present invention are described above, variations and modifications could be made by one skilled in the art within the scope of the present invention. The present invention should be limited only by the appended claims.

## Claims

1. A method for monitoring channels in a communication system, said method **characterized by** the steps of:
monitoring (402) the signal quality of a current channel for a first period;
determining (404, 410) wether the signal quality of the current channel is greater than a first threshold or less than a second threshold;
monitoring (408) another channel for a second period if the signal quality of the current channel is greater than the first threshold or less than the second threshold; and
receiving (414) a downlink from the current channel for the second period if the signal quality is less than the first threshold and greater than the second threshold.

2. The method for monitoring channels of claim 1 wherein said steps are performed by a mobile terminal in a continuous transmission communication system.

3. The method for monitoring channels of claim 1 wherein the sum of the first period and the second period comprises a period of an information transfer frame in the protocol of the communication system.

4. The method for monitoring channels of claim 1 further including a step of using error correction (406) to recover data lost while monitoring (408) another channel for the second period of if the signal quality of the current channel is greater than the first threshold.

5. The method for monitoring channels of claim 1 further including a step of monitoring another (408) channel for a second period if the current signal quality of the current channel is greater than a first threshold or the signal quality of the current channel is less than a second threshold.

6. The method for monitoring channels of claim 5 further including a step of discarding (412) data received prior to monitoring (408) another channel for the second period if the signal quality of the current channel is less than the second threshold.

7. The method for monitoring channels of claim 1 further comprising a step of using error correction (416) to recover data if the signal quality of the current channel is greater than said second threshold.

8. The method for monitoring channels of claim 2 wherein the mobile terminal is in continuous transmission, said method further **characterised by** the steps of:
receiving (402) a downlink on a current channel for a first predetermined period;
discarding (412) data if the signal quality of the current channel is less than the second predetermined threshold;
using error correction (406) to recover data lost while monitoring if the signal quality of the current channel is greater than the first predetermined threshold; and
using error correction (416) to recover data from said current channel if the signal quality of the current channel is less than the first predetermined threshold and greater than the second predetermined threshold.

9. An apparatus for monitoring channels in a communication system, said apparatus **characterized by**:
a receiver (222) for monitoring a signal quality on a current channel;
a signal quality estimator (270) for measuring the signal quality of the signal on the current channel;
a cluck (280) for establishing a first period and a second period;
a threshold evaluator (276) for determining whether the signal quality of the signal on the current channel during the first period is greater than a first threshold or less than a second threshold; and
a control circuit (205) for controlling the receiver to monitor another channel during the second period if the signal quality of the current channel is greater than the first threshold or less than the second threshold and receive a downlink from the current channel for the second period if the signal quality is less than the first threshold and greater than the second threshold.

10. The apparatus for monitoring channels of claim 9 wherein the other channel is a channel on a different communication system or another frequency.

11. The apparatus for monitoring channels of claim 9 wherein said apparatus is a mobile terminal adapted to operate in a continuous transmission communication system.

12. The apparatus for monitoring channels of claim 9 wherein said apparatus is a mobile terminal adapted to operate in a TDMA communication system

13. The apparatus for monitoring channels of claim 9 wherein the communication system is a CDMA communication system.

14. The apparatus for monitoring channels of claim 13 wherein the sum of the first period and the second period of time comprises a period of an information transfer frame in the protocol of the communication system.

15. The apparatus for monitoring channels of claim 9 further including a second receiver wherein the second receiver is adapted to operate on a second communication system.

16. The apparatus for monitoring channels of claim 9 wherein said control circuit controls said receiver to receive a downlink from the current channel for the second period if the signal quality is less than the first threshold and greater than the second threshold.

17. The apparatus for monitoring channels of claim 9 wherein staid control circuit further includes error correction means to recover data lost while monitoring another channel for the second period of the signal quality of the current channel is greater than the first predetermined threshold.

18. A communication system for continuously transmitting communication signals, said communication system comprising:
a plurality of base stations (105, 106) adapted to transmit and receive said communication signals;
at least one terminal (108,110) adapted to communicate with a base station of said plurality of base stations, said at least one terminal comprising:
a receiver (222) for monitoring a signal quality on a current channel from at least one base station;
a signal quality estimator (270) for measuring signal quality of the signal on the current channel;
a clock (280) for establishing a first period and a second period;
a threshold evaluator (276) for determining whether the signal quality of the signal on the current channel during the first period is greater than a first threshold or less than a second threshold; and
a control circuit (205) for controlling the receiver to monitor another channel during the second period if the signal quality of the current channel is greater than the first threshold and less than the second threshold and receive a downlink from the current channel for the second period if the signal quality is less than the first threshold and greater than the second threshold.

## Patentansprüche

1. Verfahren zum Überwachen von Kanälen in einem Kommunikationssystem, wobei das Verfahren durch die folgenden Schritte **gekennzeichnet** ist:
Überwachen (402) der Signalqualität eines aktuellen Kanals während eines ersten Intervalls;
Bestimmen (404, 410), ob die Signalqualität des aktuellen Kanals höher als ein erster Grenzwert oder niedriger als ein zweiter Grenzwert ist;
Überwachen (408) eines weiteren Kanals während eines zweiten Intervalls, wenn die Signalqualität des aktuellen Kanals höher als der erste Grenzwert oder niedriger als der zweite Grenzwert ist; und
Empfangen (414) eines Downlinks von dem aktuellen Kanal während des zweiten Intervalls, wenn die Signalqualität niedriger als der erste Grenzwert und höher als der zweite Grenzwert ist.

2. Verfahren zum Überwachen von Kanälen gemäß Anspruch 1, wobei die genannten Schritte von einem mobilen Endgerät in einem Dauersendekommunikationssystem durchgeführt werden.

3. Verfahren zum Überwachen von Kanälen gemäß Anspruch 1, wobei die Summe des ersten Intervalls und des zweiten Intervalls ein Intervall eines Informationsübermittlungsframes in dem Protokoll des Kommunikationssystems umfasst.

4. Verfahren zum Überwachen von Kanälen gemäß Anspruch 1, weiter mit einem Schritt, in welchem eine Fehlerkorrektur verwendet wird (406), um Daten zurückzugewinnen, die während eines Überwachens (408) eines anderen Kanals während des zweiten Intervalls verlorengingen, wenn die Signalqualität des aktuellen Kanals höher als der erste Grenzwert ist.

5. Verfahren zum Überwachen von Kanälen gemäß Anspruch 1, weiter mit einem Schritt, in welchem ein anderer (408) Kanal während eines zweiten Intervalls überwacht wird, wenn die aktuelle Signalqualität des aktuellen Kanals höher als ein erster Grenzwert oder die Signalqualität des aktuellen Kanals niedriger als ein zweiter Grenzwert ist.

6. Verfahren zum Überwachen von Kanälen gemäß Anspruch 5, weiter mit einem Schritt, in welchem Daten, die vor einem Überwachen (408) eines anderen Kanals während des zweiten Intervalls empfangen wurden, außerachtgelassen werden (412), wenn die Signalqualität des aktuellen Kanals niedriger als der zweite Grenzwert ist.

7. Verfahren zum Überwachen von Kanälen gemäß Anspruch 1, weiter umfassend einen Schritt, in welchem eine Fehlerkorrektur verwendet wird (416), um Daten zurückzugewinnen, wenn die Signalqualität des aktuellen Kanals höher als der zweite Grenzwert ist.

8. Verfahren zum Überwachen von Kanälen gemäß Anspruch 2, wobei sich das mobile Endgerät in einem Dauersendebetrieb befindet, wobei das Verfahren weiter durch die folgenden Schritte **gekennzeichnet** ist:
Empfangen (402) eines Downlinks auf einem aktuellen Kanal während eines ersten vorherbestimmten Intervalls;
Außerachtlassen (412) von Daten, wenn die Signalqualität des aktuellen Kanals niedriger als der zweite vorherbestimmte Grenzwert ist;
Verwenden einer Fehlerkorrektur (406), um Daten zurückzugewinnen, welche während eines Überwachens verlorengingen, wenn die Signalqualität des aktuellen Kanals höher als der erste vorherbestimmte Grenzwert ist; und
Verwenden einer Fehlerkorrektur (416), um Daten aus dem genannten aktuellen Kanal zurückzugewinnen, wenn die Signalqualität des aktuellen Kanals niedriger als der erste vorherbestimmte Grenzwert und höher als der zweite vorherbestimmte Grenzwert ist.

9. Vorrichtung zum Überwachen von Kanälen in einem Kommunikationssystem, wobei die Vorrichtung durch folgendes **gekennzeichnet** ist:
einen Empfänger (222) zum Überwachen einer Signalqualität auf einem aktuellen Kanal;
einen Signalqualitätsschätzer (270) zum Messen der Signalqualität des Signals auf dem aktuellen Kanal;
eine Uhr (280) zum Festlegen eines ersten Intervalls und eines zweiten Intervalls;
einen Grenzwertauswerter (276) zum Bestimmen, ob die Signalqualität des Signals auf dem aktuellen Kanal während des ersten Intervalls höher als ein erster Grenzwert oder niedriger als ein zweiter Grenzwert ist; und
eine Steuerschaltung (205) zum Steuern des Empfängers derart, dass dieser einen anderen Kanal während des zweiten Intervalls überwacht, wenn die Signalqualität des aktuellen Kanals höher als der erste Grenzwert oder niedriger als der zweite Grenzwert ist, und er während des zweiten Intervalls einen Downlink von dem aktuellen Kanal empfängt, wenn die Signalqualität niedriger als der erste Grenzwert und höher als der zweite Grenzwert ist.

10. Vorrichtung zum Überwachen von Kanälen gemäß Anspruch 9, wobei der andere Kanal ein Kanal auf einem anderen Kommunikationssystem oder einer anderen Frequenz ist.

11. Vorrichtung zum Überwachen von Kanälen gemäß Anspruch 9, wobei die Vorrichtung ein mobiles Endgerät ist, welches dazu ausgelegt ist, in einem Dauersendekommunikationssystem betrieben zu werden.

12. Vorrichtung zum Überwachen von Kanälen gemäß Anspruch 9, wobei die Vorrichtung ein mobiles Endgerät ist, welches dazu ausgelegt ist, in einem TDMA-Kommunikationssystem betrieben zu werden.

13. Verfahren zum Überwachen von Kanälen gemäß Anspruch 9, wobei das Kommunikationssystem ein CDMA-Kommunikationssystem ist.

14. Vorrichtung zum Überwachen von Kanälen gemäß Anspruch 13, wobei die Summe des ersten Zeitintervalls und des zweiten Zeitintervalls ein Intervall eines Informationsübermittlungsframes in dem Protokoll des Kommunikationssystems umfasst.

15. Vorrichtung zum Überwachen von Kanälen gemäß Anspruch 9, weiter mit einem zweiten Empfänger, wobei der zweite Empfänger dazu ausgelegt ist, auf einem zweiten Kommunikationssystem betrieben zu werden.

16. Vorrichtung zum Überwachen von Kanälen gemäß Anspruch 9, wobei die genannte Steuerschaltung den genannten Empfänger derart steuert, dass dieser während des zweiten Intervalls einen Downlink von dem aktuellen Kanal empfängt, wenn die Signalqualität niedriger als der erste Grenzwert und höher als der zweite Grenzwert ist.

17. Vorrichtung zum Überwachen von Kanälen gemäß Anspruch 9, wobei die genannte Steuerschaltung weiter Fehlerkorrekturmittel aufweist, um Daten zurückzugewinnen, die während eines Überwachens eines anderen Kanals während des zweiten Intervalls verlorengingen, wenn die Signalqualität des aktuellen Kanals höher als der erste vorherbestimmte Grenzwert ist.

18. Kommunikationssystem zum kontinuierlichen Übertragen von Kommunikationssignalen, wobei das Kommunikationssystem folgendes umfasst:
eine Pluralität von Basisstationen (105, 106), die dazu ausgelegt sind, die Kommunikationssignale auszusenden und zu empfangen;
mindestens ein Endgerät (108, 110), das dazu ausgelegt ist, mit einer Basisstation aus der Pluralität von Basisstationen zu kommunizieren, wobei das mindestens eine Endgerät folgendes aufweist:
einen Empfänger (222) zum Überwachen einer Signalqualität auf einem aktuellen Kanal von mindestens einer Basisstation;
einen Signalqualitätsschätzer (270) zum Messen einer Signalqualität des Signals auf dem aktuellen Kanal;
eine Uhr (280) zum Festlegen eines ersten Intervalls und eines zweiten Intervalls;
einen Grenzwertauswerter (276) zum Bestimmen, ob die Signalqualität des Signals auf dem aktuellen Kanal während des ersten Intervalls höher als ein erster Grenzwert oder niedriger als ein zweiter Grenzwert ist; und
eine Steuerschaltung (205) zum Steuern des Empfängers derart, dass dieser einen anderen Kanal während des zweiten Intervalls überwacht, wenn die Signalqualität des aktuellen Kanals höher als der erste Grenzwert und niedriger als der zweite Grenzwert ist, und er während des zweiten Intervalls einen Downlink von dem aktuellen Kanal empfängt, wenn die Signalqualität niedriger als der erste Grenzwert und höher als der zweite Grenzwert ist.

## Revendications

1. Procédé de surveillance de canaux dans un système de communication, ledit procédé étant **caractérisé par** les étapes consistant à :
surveiller (402) la qualité de signal d'un canal courant pendant une première période ;
déterminer (404, 410) si la qualité de signal du canal courant est supérieure à un premier seuil ou inférieure à un second seuil ;
surveiller (408) un autre canal pendant une seconde période si la qualité de signal du canal courant est supérieure au premier seuil ou inférieure au second seuil ; et
recevoir (414) une liaison descendante depuis le canal courant pendant la seconde période si la qualité de signal est inférieure au premier seuil et supérieure au second seuil.

2. Procédé de surveillance de canaux selon la revendication 1, dans lequel lesdites étapes sont exécutées par un terminal mobile dans un système de communication à transmission continue.

3. Procédé de surveillance de canaux selon la revendication 1, dans lequel la somme de la première période et de la seconde période comprend une période de trame de transfert d'informations dans le protocole du système de communication.

4. Procédé de surveillance de canaux selon la revendication 1, comportant en outre une étape d'utilisation d'une correction d'erreurs (406) pour récupérer des données perdues pendant la surveillance (408) d'un autre canal pendant la seconde période ou si la qualité de signal du canal courant est supérieure au premier seuil.

5. Procédé de surveillance de canaux selon la revendication 1, comportant en outre une étape de surveillance d'un autre canal (408) pendant une seconde période si la qualité de signal courant du canal courant est supérieure à un premier seuil ou si la qualité de signal du canal courant est inférieure à un second seuil.

6. Procédé de surveillance de canaux selon la revendication 5, comportant en outre une étape de suppression (412) des données reçues avant la surveillance (408) d'un autre canal pendant la seconde période si la qualité de signal du canal courant est inférieure au second seuil.

7. Procédé de surveillance de canaux selon la revendication 1, comprenant en outre une étape d'utilisation d'une correction d'erreurs (416) pour récupérer des données si la qualité de signal du canal courant est supérieure audit second seuil.

8. Procédé de surveillance de canaux selon la revendication 2, dans lequel le terminal mobile est en transmission continue, ledit procédé étant **caractérisé en outre par** les étapes consistant à :
recevoir (402) une liaison descendante sur un canal courant pendant une première période prédéterminée ;
supprimer (412) des données si la qualité de signal du canal courant est inférieure au second seuil prédéterminé ;
utiliser une correction d'erreurs (406) pour récupérer des données perdues pendant la surveillance si la qualité de signal du canal courant est supérieure au premier seuil prédéterminé ; et
utiliser une correction d'erreurs (416) pour récupérer des données dudit canal courant si la qualité de signal du canal courant est inférieure au premier seuil prédéterminé et supérieure au second seuil prédéterminé.

9. Dispositif de surveillance de canaux dans un système de communication, ledit dispositif étant **caractérisé par** :
un récepteur (222) pour surveiller la qualité de signal sur un canal courant ;
un dispositif d'estimation de qualité de signal (270) pour mesurer la qualité de signal du signal sur le canal courant ;
une horloge (280) pour déterminer une première période et une seconde période ;
un dispositif d'évaluation de seuil (276) pour déterminer si la qualité de signal du signal sur le canal courant durant la première période est supérieure à un premier seuil ou inférieure à un second seuil ; et
un circuit de contrôle (205) pour contrôler le récepteur pour surveiller un autre canal durant la seconde période si la qualité de signal du canal courant est supérieure au premier seuil ou inférieure au second seuil et pour recevoir une liaison descendante depuis le canal courant pendant la seconde période si la qualité de signal est inférieure au premier seuil et supérieure au second seuil.

10. Dispositif de surveillance de canaux selon la revendication 9, dans lequel l'autre canal est un canal sur un système de communication différent ou sur une autre fréquence.

11. Dispositif de surveillance de canaux selon la revendication 9, dans lequel ledit dispositif est un terminal mobile adapté à fonctionner dans un système de communication à transmission continue.

12. Dispositif de surveillance de canaux selon la revendication 9, dans lequel ledit dispositif est un terminal mobile adapté à fonctionner dans un système de communication AMRT.

13. Dispositif de surveillance de canaux selon la revendication 9, dans lequel le système de communication est un système de communication AMRC.

14. Dispositif de surveillance de canaux selon la revendication 13, dans lequel la somme de la première période et de la seconde période de temps comprend une période de trame de transfert d'informations dans le protocole du système de communication.

15. Dispositif de surveillance de canaux selon la revendication 9, comportant en outre un second récepteur dans lequel le second récepteur est adapté à fonctionner sur un second système de communication.

16. Dispositif de surveillance de canaux selon la revendication 9, dans lequel ledit circuit de contrôle contrôle ledit récepteur pour recevoir une liaison descendante depuis le canal courant pendant la seconde période si la qualité de signal est inférieure au premier seuil et supérieure au second seuil.

17. Dispositif de surveillance de canaux selon la revendication 9, dans lequel ledit circuit de contrôle comporte en outre un moyen de correction d'erreurs pour récupérer des données perdues pendant la surveillance d'un autre canal pendant la seconde période ou si la qualité de signal du canal courant est supérieure au premier seuil prédéterminé.

18. Système de communication pour transmettre en continu des signaux de communication, ledit système de communication comprenant :
une pluralité de stations de base (105, 106) adaptées à émettre et à recevoir lesdits signaux de communication ;
au moins un terminal (108, 110) adapté à communiquer avec une station de base de ladite pluralité de stations de base, ledit au moins un terminal comprenant :
un récepteur (222) pour surveiller la qualité de signal sur un canal courant provenant d'au moins d'une station de base ;
un dispositif d'estimation de qualité de signal (270) pour mesurer la qualité de signal du signal sur le canal courant ;
une horloge (280) pour déterminer une première période et une seconde période ;
un dispositif d'évaluation de seuil (276) pour déterminer si la qualité de signal du signal sur le canal courant durant la première période est supérieure à un premier seuil ou inférieure à un second seuil ; et
un circuit de contrôle (205) pour contrôler le récepteur pour surveiller un autre canal durant la seconde période si la qualité de signal du canal courant est supérieure au premier seuil ou inférieure au second seuil et pour recevoir une liaison descendante du canal courant pendant la seconde période si la qualité de signal est inférieure au premier seuil et supérieure au second seuil.
